# EUROPÄISCHE PATENTSCHRIFT

(11) **EP 4 488 156 B1**
(45) Veröffentlichungstag und Bekanntmachung des Hinweises auf die Patenterteilung: **31.12.2025**
(21) Anmeldenummer: 24184375.4
(22) Anmeldetag: 25.06.2024
(51) Int. Cl.: B62K 5/02, B62K 5/023, B62K 5/05, B62K 5/06, B62K 5/08, B62K 5/10, B62J 45/415

(54) **UNTERSTÜTZUNGSVORRICHTUNG FÜR EIN FAHRRAD UND VERFAHREN ZUM BETREIBEN DER UNTERSTÜTZUNGSVORRICHTUNG**
SUPPORT DEVICE FOR A BICYCLE AND METHOD FOR OPERATING THE SUPPORT DEVICE
DISPOSITIF DE SUPPORT POUR BICYCLETTE ET PROCÉDÉ DE FONCTIONNEMENT DU DISPOSITIF DE SUPPORT

(30) Priorität: 03.07.2023 AT 505232023
(43) Veröffentlichungstag der Anmeldung: 08.01.2025
(73) Patentinhaber: Maierhofer, Johannes, 8524 Bad Gams (AT)
(72) Erfinder: Maierhofer, Johannes, 8524 Bad Gams (AT)
(74) Vertreter: SONN Patentanwälte GmbH & Co KG

(56) Entgegenhaltungen:
- WO-A1-2019/099730
- AT-A1- 522 428

## Beschreibung

Die Erfindung betrifft eine Unterstützungsvorrichtung für ein Fahrrad, insbesondere zum Unterstützen einer fahrenden Person beim Auffinden und Halten des Gleichgewichts, aufweisend:
ein Basisteil;
ein Schwenkelement;
ein am Schwenkelement angeordnetes Verbindungselement zur Verbindung mit einem Bauteil des Fahrrads, insbesondere einem Rahmen oder einer Gabel des Fahrrads;
ein Kippgelenk, das mit dem Basisteil und dem Schwenkelement verbunden ist und eine Neigung des Schwenkelements gegenüber dem Basisteil ermöglicht;
eine Blockiereinrichtung zum Blockieren einer Neigung des Schwenkelements gegenüber dem Basisteil in zumindest eine Richtung; und
eine Erfassungseinrichtung zum Erfassen einer Soll-Neigung des Schwenkelements gegenüber dem Basisteil,
wobei die Erfassungseinrichtung dazu eingerichtet ist, im Falle einer Abweichung einer Ist-Neigung des Schwenkelements gegenüber dem Basisteil von der Soll-Neigung die Blockiereinrichtung derart anzusteuern, dass eine Neigung des Schwenkelements gegenüber dem Basisteil, die zu einer Vergrößerung der Abweichung der Ist-Neigung von der Soll-Neigung führt, blockiert wird und eine Neigung des Schwenkelements gegenüber dem Basisteil, die zu einer Reduktion der Abweichung der Ist-Neigung von der Soll-Neigung führt, ermöglicht wird.

Des Weiteren betrifft die Erfindung ein Verfahren zum Betreiben einer Unterstützungsvorrichtung für ein Fahrrad, insbesondere zum Unterstützen einer fahrenden Person beim Auffinden und Halten des Gleichgewichts, wobei die Unterstützungsvorrichtung folgendes aufweist:
ein Basisteil;
ein Schwenkelement;
ein am Schwenkelement angeordnetes Verbindungselement zur Verbindung mit einem Bauteil des Fahrrads, insbesondere einem Rahmen oder einer Gabel des Fahrrads;
ein Kippgelenk, das mit dem Basisteil und dem Schwenkelement verbunden ist und eine Neigung des Schwenkelements gegenüber dem Basisteil ermöglicht;
eine Blockiereinrichtung zum Blockieren einer Neigung des Schwenkelements gegenüber dem Basisteil in zumindest eine Richtung; und
eine Erfassungseinrichtung zum Erfassen einer Soll-Neigung des Schwenkelements gegenüber dem Basisteil,
wobei die Erfassungseinrichtung mit der Blockiereinrichtung verbunden ist im Falle einer Abweichung einer Ist-Neigung des Schwenkelements gegenüber dem Basisteil von der Soll-Neigung die Blockiereinrichtung derart ansteuert, dass eine Neigung des Schwenkelements gegenüber dem Basisteil, die zu einer Vergrößerung der Abweichung der Ist-Neigung von der Soll-Neigung führt, blockiert wird und eine Neigung des Schwenkelements gegenüber dem Basisteil, die zu einer Reduktion der Abweichung der Ist-Neigung von der Soll-Neigung führt, ermöglicht wird.

Fahrradfahren erfordert insbesondere bei niedrigen Geschwindigkeiten einen gut funktionierenden Gleichgewichtssinn, um Stürze zu vermeiden. Unterstützungsvorrichtungen für Fahrräder der oben beschriebenen Art ermöglichen Personen mit noch nicht ausreichend geschultem bzw. beeinträchtigtem Gleichgewichtssinn oder unsicheren Personen und Personen, die Fahrradfahren (wieder-)erlernen möchten, ein unfallfreies Fahrradfahren, da die Fahrräder, die mit derartigen Unterstützungsvorrichtungen verbunden sind, vor einem Umkippen bewahrt und dadurch Stürze vermieden werden.

Aus der AT 522428 A1 ist eine Stützeinrichtung bekannt, die zwei auf einer gemeinsamen Querverbindung drehbar angeordnete Räder und ein Verbindungselement zur Verbindung mit einem Fahrrad aufweist. Das Verbindungselement ist um einen Kippwinkel gegenüber der Querachse verschwenkbar. Mittels Aktuatoren, beispielsweise Hydraulikzylinder oder Elektroantriebe, wird der Kippwinkel stets derart eingestellt, dass das Verbindungselement exakt in einer ideal ausgerichteten Lage gehalten wird. Auf diese Weise ist das mit der Stützeinrichtung verbundene Fahrrad auch auf schrägem Untergrund oder in Kurven stets optimal ausgerichtet, sodass Stürze vermieden werden.

Bei der in der AT 522428 A1 offenbarten Einrichtung wird das Fahrrad automatisiert in der ideal ausgerichteten Lage gehalten, sodass hinsichtlich der Ausrichtung des Fahrrads kein Zutun der fahrenden Person erforderlich ist, was für die Sturzvermeidung beim Fahrradfahren an sich ein Vorteil ist. Allerdings geht damit auch der Nachteil einher, dass der Gleichgewichtssinn der fahrradfahrenden Person nicht gefordert wird. Bei Personen, die das Fahrradfahren (wieder) erlernen möchten, bzw. bei Personen, die einen beeinträchtigen Gleichgewichtssinn besitzen und diesen trainieren möchten, tritt daher kein oder nur ein geringer Lerneffekt ein. Die in AT 522428 A1 offenbarte Vorrichtung ist daher zum Trainieren und Schulen des Gleichgewichtssinns ungeeignet.

Die in AT 522428 A1 beschriebene Erfindung erfordert zudem eine zusätzliche Energieversorgung, z.B. mitzuführende Batterien, die aber die Funktion und Reichweite einer solchen Unterstützungseinrichtung begrenzen.

Unterstützungsvorrichtungen für motorisierte Fahrzeuge sind aus EP 1 533 217 A1, US 2004/0256835 A1, US 2012/0133116 A1, WO 01/46003 A1, DE 10 2008 001 970 A1, WO 2019/099730 A1, die die Merkmale des Oberbegriffs des unabhängigen Anspruches 1 offenbart, und US 4,826,194 bekannt. Aus der EP 0 769 701 A1 ist zudem eine Vorrichtung zum Erfassen einer Fahrzeugneigung bekannt. Bei den in den genannten Dokumenten offenbarten Erfassungseinrichtungen handelt es sich vorwiegend um elektronische Erfassungseinrichtungen. Derartige Erfassungseinrichtungen sind zum einen relativ komplex, zum anderen müssen sie mit elektrischer Energie versorgt werden.

Im Lichte dieser Ausführungen ist es Aufgabe der Erfindung, die beschriebenen Nachteile des Standes der Technik zumindest teilweise zu lindern. Vorzugsweise ist es Aufgabe der vorliegenden Erfindung, eine Unterstützungsvorrichtung und ein Verfahren der eingangs beschriebenen Art zur Verfügung zu stellen, mit denen eine Person beim Fahrradfahren bedarfsgerecht und dauerhaft unterstützt wird, aber dennoch auch der Gleichgewichtssinn gefordert wird. Vorzugsweise ist es auch eine Aufgabe der Erfindung, eine Unterstützungsvorrichtung und ein Verfahren der eingangs beschriebenen Art zur Verfügung zu stellen, die ohne elektrische Energieversorgung auskommen.

Gelöst wird diese Aufgabe durch eine Unterstützungsvorrichtung gemäß Anspruch 1 und ein Verfahren zum Betreiben einer Unterstützungsvorrichtung gemäß Anspruch 14. Ein Fahrrad mit einer erfindungsgemäßen Unterstützungsvorrichtung ist in Anspruch 13 angegeben.

Erfindungsgemäß ist bei einer Unterstützungsvorrichtung der eingangs beschriebenen Art gemäß Anspruch 1 vorgesehen, dass die Erfassungseinrichtung einen Flüssigkeitsbehälter mit einer Flüssigkeit und einen in der Flüssigkeit gelagerten Schwimmkörper aufweist. Vorteilhafterweise verhindert die Unterstützungsvorrichtung dadurch zum einen eine weitere Abweichung der Ist-Neigung von der Soll-Neigung, ermöglicht gleichzeitig aber der Person auf einem mit der Unterstützungsvorrichtung verbundenen Fahrrad das Trainieren des Gleichgewichtssinnes, da diese stets selbstständig durch Verlagerung des Gewichts die Ist-Neigung des Schwenkelements sukzessive näher an die Soll-Neigung heranführen kann. Mit anderen Worten wird die fahrende Person daran gehindert, durch falsche Gewichtsverlagerung die Abweichung der Ist-Neigung von der Soll-Neigung zu vergrößern und dadurch das Sturzrisiko zu erhöhen, aber gleichzeitig in die Lage versetzt, das Schwenkelement und damit das mit der Unterstützungsvorrichtung verbundene Fahrrad selbstständig korrekt auszurichten. Die Unterstützungsvorrichtung verringert somit nicht, wie beim Stand der Technik, aktiv die Abweichung des Ist-Winkels vom Soll-Winkel, sondern verhindert lediglich eine Vergrößerung dieser Abweichung. In diesem Aspekt kann die Unterstützungsvorrichtung somit als passiv bezeichnet werden. Bevorzugt ist für die Unterstützungsvorrichtung keine elektrische Energieversorgung, wie etwa eine Batterie oder ein Akkumulator, erforderlich. Die Ist-Neigung entspricht einer im Moment vorliegenden Neigung des Schwenkelements gegenüber dem Basisteil, gemessen beispielsweise in Grad oder Radiant. Von welchem Bezugspunkt die Soll-Neigung und die Ist-Neigung gemessen werden, ist für die Erfindung unerheblich, solange es sich um den gleichen Bezugspunkt handelt. Die Soll-Neigung ist eine Neigung des Schwenkelements, bei der ein mit der Unterstützungsvorrichtung verbundenes Fahrrad ideal gemäß der jeweiligen Fahrsituation ausgerichtet ist, sodass ein Umkippen der Unterstützungsvorrichtung und dem damit verbundenen Fahrrad verhindert wird. In einem rechtshändigen Koordinatensystem mit den rechtwinkelig zueinander ausgerichteten Achsen X, Y und Z betrachtet, in dem Erdanziehungskraft parallel zu der Z-Achse liegt und die Fahrtrichtung des mit der Unterstützungsvorrichtung verbundenen Fahrrads in der Y-Z-Ebene liegt, ist die Soll-Neigung des Schwenkelements bevorzugt eine Neigung, in der die Normalprojektion der vektoriellen Summe aus der Erdbeschleunigung und einer allfälligen Zentrifugalbeschleunigung in die X-Z-Ebene und die Normalprojektion der Neigung des Schwenkelements in die X-Z-Ebene im Wesentlichen parallel ausgerichtet sind. Sowohl die Erdbeschleunigung, als auch die Zentrifugalbeschleunigung erzeugen jeweils eine Kraft, die auf die fahrende Person, das Fahrrad und die Unterstützungsvorrichtung wirkt. Beim Geradeausfahren des Fahrrads mit der Unterstützungsvorrichtung auf einer ebenen Fläche weist die Normalprojektion der Soll-Neigung in die X-Z Ebene keine X-Komponente auf, da keine Zentrifugalbeschleunigung vorhanden ist. Bei einer Kurvenfahrt weist die Normalprojektion der Soll-Neigung aufgrund der Zentrifugalbeschleunigung eine X-Komponente in die X-Z-Ebene auf, in der das gemäß der Soll-Neigung ausgerichtete Schwenkelement die Zentrifugalkraft kompensiert. Wenn die Ist-Neigung der Soll-Neigung entspricht, verläuft die Verbindungslinie, in die X-Z-Ebene projiziert, zwischen dem Schwerpunkt des aus der Unterstützungsvorrichtung, dem damit verbundenen Fahrradrahmen und der fahrenden Person parallel zur vektoriellen Summe aus Zentrifugalkraft und Erdanziehungskraft. Das Basisteil kann bei einer Ausführungsform der Erfindung durch ein Rahmenteil gebildet sein. Das Rahmenteil kann beispielsweise zwei Querstreben aufweisen, die über zwei Endverbindungen miteinander an den jeweiligen Enden der Querstreben gelenkig verbunden sind, sodass ein verschwenkbares Parallelogramm gebildet wird. An dem Basisteil können zwei gegenüberliegende Räder drehbar befestigt sein. Die Räder können beispielsweise an den erwähnten Endverbindungen insbesondere mithilfe von Achsstummeln drehbar gelagert sein. Durch Verschwenken der Endverbindungen des Rahmenteils können die Räder gelenkt und/oder bei Kurvenfahrten in das Kurveninnere geneigt werden, um die Kurvenlage zu verbessern. Das Basisteil kann einen Lenkmechanismus aufweisen, um die Räder um eine Hochachse zu lenken. Der Lenkmechanismus kann mit der Vorderradgabel des Fahrrads verbunden sein, um Lenkbewegungen des Lenkers des Fahrrads zu übertragen, um die Räder der Unterstützungsvorrichtung vom Fahrrad aus zu lenken. Bei einer alternativen Ausführungsform der Erfindung kann das Schwenkelement selbst ein Lenkerteil zum Lenken der Unterstützungsvorrichtung bzw. des mit der Unterstützungsvorrichtung verbundenen Fahrrads aufweisen. Das Basisteil kann des Weiteren eine Bremsvorrichtung für die Räder aufweisen, welche bevorzugt jeweils eine Scheibenbremseinheit für jedes Rad besitzt. Das Schwenkelement ist über das Kippgelenk mit dem Basisteil verbunden. Das Kippgelenk kann beispielsweise durch einen in einer Aufnahme gelagerten Stift gebildet sein. Mithilfe des Kippgelenks kann das Schwenkelement gegenüber dem Basisteil quer zur Fahrtrichtung geneigt werden. Die Ist-Neigung und die Soll-Neigung bezeichnen daher jeweils eine seitliche Neigung quer zur Fahrtrichtung. Die Neigung des Schwenkelements gegenüber dem Basisteil entspricht somit einer Rollbewegung. Zur Verbindung mit dem Fahrrad weist das Schwenkelement ein Verbindungselement auf, welches insbesondere zur Verbindung mit einem Fahrradrahmen, einem Steuerrohr am Fahrradrahmen oder einer Gabel des Fahrrads ausgebildet ist. Um die Verschwenkung des Schwenkelements noch effizienter auf den Fahrradrahmen zu übertragen, kann bei einer Ausführungsform zusätzlich noch zumindest ein Übertragungselement, beispielsweise eine Strebe, vorgesehen sein, die an dem Schwenkelement vorgesehen und mit dem Rahmen des Fahrrads verbindbar ist. Die Unterstützungsvorrichtung kann anstelle des Vorderrads oder des Hinterrads eines zweirädrigen Fahrrads eingesetzt werden. Die Erfassungseinrichtung ist dazu eingerichtet, die Soll-Neigung zu erfassen, welche insbesondere durch allfällige Zentrifugalkräfte oder seitliche Neigungen der Fahrbahn beeinflusst wird. Die Erfassungseinheit kann an dem Basisteil oder an dem Schwenkelement angeordnet sein. Die Erfassungseinrichtung kann beispielsweise einen elektronischen oder elektromechanischen Sensor aufweisen, der einwirkende Kräfte und Beschleunigungen messen kann. Bei einer anderen Ausführungsform der Erfindung weist die Erfassungseinrichtung eine Flüssigkeit in einem Behälter auf, um die Soll-Neigung zu erfassen. Die Blockiereinrichtung ist dazu eingerichtet, in Abhängigkeit von einer Ansteuerung eine Neigung des Schwenkelements gegenüber dem Basisteil zumindest in eine Richtung zu blockieren oder freizugeben. Auf diese Weise kann bei entsprechender Ansteuerung durch die Erfassungseinrichtung eine weitere Neigung des Schwenkelements weg von der Soll-Neigung verhindert, aber eine Verschwenkung, die zu einer Verringerung der Abweichung zwischen der Soll-Neigung und der Ist-Neigung führt, ermöglicht werden. Die Blockiereinrichtung kann beispielsweise durch ein sperrbares Drehgelenk realisiert werden.

Bevorzugt ist, wenn die Blockiereinrichtung dazu eingerichtet ist, in einer ersten Stellung eine Neigung des Schwenkelements gegenüber dem Basisteil in eine erste Richtung zu erlauben und in eine zweite Richtung zu blockieren, und in einer zweiten Stellung eine Neigung des Schwenkelements gegenüber dem Basisteil in die zweite Richtung zu erlauben und in die erste Richtung zu blockieren. In einer dritten Stellung der Blockiereinrichtung ist eine Neigung weder in die erste, noch in die zweite Richtung möglich. Die Blockiereinrichtung kann insbesondere durch die Erfassungseinrichtung in die erste, zweite und/oder dritte Stellung gebracht werden. Um die Blockiereinrichtung in die erste, zweite und/oder dritte Stellung zu bringen, kann eine noch näher zu beschreibende Betätigungseinheit vorgesehen sein, die mit der Blockiereinrichtung verbunden ist. Die erste Richtung ist der zweiten Richtung entgegengesetzt. Die erste Richtung und die zweite Richtung sind bevorzugt Drehrichtungen im Wesentlichen quer zur Fahrtrichtung der Unterstützungsvorrichtung oder um eine Drehachse des Kippgelenks herum. Wenn ein Verschwenken des Schwenkelements in die erste Richtung zu einer Verringerung der Abweichung der Ist-Neigung von der Soll-Neigung führen würde, wird die Blockiereinrichtung von der Erfassungseinrichtung in die erste Stellung gebracht. Wenn ein Verschwenken des Schwenkelements in die zweite Richtung zu einer Verringerung der Abweichung der Ist-Neigung von der Soll-Neigung führen würde, wird die Blockiereinrichtung von der Erfassungseinrichtung in die zweite Stellung gebracht. Wenn die Ist-Neigung der Soll-Neigung entspricht, wird die Blockiereinrichtung vorzugsweise in die dritte Stellung gebracht. In einer Noteinstellung kann die Blockiereinrichtung unabhängig von einer allfälligen Abweichung zwischen der Ist-Neigung und der Soll-Neigung in die dritte Stellung gebracht werden.

Wie bereits erwähnt, ist es günstig, wenn eine Betätigungseinheit zum Aktivieren der ersten und/oder zweiten Stellung vorgesehen ist, wobei die Betätigungseinheit insbesondere über einen Bowdenzug, ein Gestänge oder eine Hydraulikleitung mit der Blockiereinrichtung verbunden ist. Mit der Betätigungseinheit kann die Blockiereinrichtung auch in die dritte Stellung gebracht werden. Die Betätigungseinrichtung kann zumindest ein Betätigungselement, beispielsweise eine Betätigungsfläche, einen Druckknopf oder einen Schalter, aufweisen, mit der die erste und/oder zweite Stellung aktiviert werden kann. Bevorzugt sind ein erstes und ein zweites Betätigungselement vorgesehen, wobei das erste Betätigungselement die erste Stellung und das zweite Betätigungselement die zweite Stellung aktiviert. Vorzugsweise kann die Blockiereinrichtung in die dritte Stellung gebracht werden, indem kein Betätigungselement oder beide Betätigungselemente betätigt werden. Mit anderen Worten liegt die dritte Stellung vor, wenn weder die erste, noch die zweite Stellung aktiviert werden. Die Aktivierung der ersten, zweiten und/oder dritten Stellung kann beispielsweise über zumindest einen Bowdenzug, ein Gestänge oder zumindest eine Hydraulikleitung an die Blockiereinrichtung weitergegeben werden. Besonders bevorzugt ist, wenn für das erste Betätigungselement zur Aktivierung der ersten Stellung und für das zweite Betätigungselement zur Aktivierung der zweiten Stellung jeweils ein Bowdenzug, ein Gestänge oder jeweils eine Hydraulikleitung vorgesehen und mit der Blockiereinrichtung verbunden ist.

Um die Aktivierung der ersten und/oder zweiten Stellung durch die Erfassungseinrichtung zu vereinfachen, ist bevorzugt vorgesehen, dass die Betätigungseinheit an dem Schwenkelement angeordnet ist. Auf diese Weise macht die Betätigungseinheit eine Schwenkbewegung des Schwenkelements mit. Auch die Erfassungseinrichtung kann an dem Schwenkelement angeordnet sein.

Um eine Neigung des Schwenkelements zu stabilisieren, zu blockieren oder zu erlauben, ist es günstig, wenn die Blockiereinrichtung ein ausziehbares und zusammenschiebbares, insbesondere teleskopierbares, Stabilisierungselement aufweist, das mit dem Basisteil und dem Schwenkelement verbunden ist. Bei einer Ausführungsform der Erfindung sind zumindest zwei gleichartige Stabilisierungselemente vorgesehen. Mit dem Stabilisierungselement kann eine Neigung des Schwenkelements in eine Richtung blockiert oder ermöglicht werden. Das Stabilisierungselement ist vorzugsweise an dem Basisteil und dem Schwenkelement jeweils drehbar gelagert. Günstig ist, wenn das Stabilisierungselement in eine Auszugsrichtung vorgespannt ist und eine Kraft in die Auszugsrichtung ausübt. Mit anderen Worten übt das Stabilisierungselement bevorzugt ständig eine Kraft in Auszugsrichtung aus. Auf diese Weise kann das Schwenkelement und damit das mit der Unterstützungsvorrichtung verbundene Fahrrad stabilisiert werden.

Bei einer bevorzugten Ausführungsform der Erfindung ist ein Sperrmechanismus an dem Stabilisierungselement angeordnet, wobei der Sperrmechanismus dazu eingerichtet ist, in einer Sperrstellung ein Zusammenschieben des Stabilisierungselements zu blockieren und in einer Freigabestellung ein Zusammenschieben des Stabilisierungselements zu ermöglichen. Wenn mehrere Stabilisierungselemente vorgesehen sind, kann jedes einen eigenen Sperrmechanismus besitzen. Der Sperrmechanismus verhindert demnach, dass das Stabilisierungselement zusammengeschoben und dadurch das Schwenkelement in eine Richtung, die durch das Zusammenschieben des Stabilisierungselements ermöglicht würde, verschwenkt werden kann. Bevorzugt ist, wenn sowohl in der Sperrstellung, als auch in der Freigabestellung ein Ausziehen des Stabilisierungselements möglich ist. Noch mehr bevorzugt ist, wenn das Stabilisierungselement sowohl in der Sperrstellung, als auch in der Freigabestellung in die Auszugsrichtung vorgespannt ist und somit eine Kraft in die Auszugsrichtung ausübt.

Bevorzugt ist, wenn das zumindest eine Stabilisierungselement eine Gasdruckfeder ist.

Bei einer vorteilhaften Ausgestaltung der Erfindung weist die Blockiereinrichtung zwei Stabilisierungselemente auf, die vorzugsweise an gegenüberliegenden Seiten des Schwenkelements angeordnet sind. Dadurch kann eine besonders vorteilhafte Stabilisierung des Schwenkelements erfolgen. Jedes Stabilisierungselement kann einen eigenen Sperrmechanismus aufweisen.

Um auf besonders vorteilhafte Weise ein Verringern der Abweichung der Ist-Neigung von der Soll-Neigung zu ermöglichen und eine Vergrößerung der Abweichung zu verhindern, ist es günstig, wenn die Betätigungseinheit zwei Betätigungselemente aufweist und jeweils ein Sperrmechanismus an jedem Stabilisierungselement vorgesehen ist, wobei die Betätigungselemente jeweils mit einem Sperrmechanismus an einem Stabilisierungselement verbunden sind und dazu eingerichtet sind, die Sperrmechanismen zu aktuieren. Auf diese Weise kann durch jeweils ein Betätigungselement ein Stabilisierungselement individuell in die Sperrstellung oder die Freigabestellung gebracht werden.

Bei einer Ausführungsform der Erfindung kann die Erfassungseinrichtung dazu eingerichtet sein, die Soll-Neigung mithilfe einer elektronischen Sensoreinheit oder mithilfe eines beweglich gelagerten Pendels zu erfassen. Die elektronische Sensoreinheit kann einen oder mehrere Beschleunigungssensoren, vorzugsweise innerhalb einer inertialen Messeinheit (englisch: Inertial Measurement Unit, kurz IMU) aufweisen. Auch ein beweglich gelagertes Pendel ermöglicht durch die Ausrichtung gemäß der Kombination aus Erdanziehungskraft und Zentrifugalkraft eine Bestimmung der Soll-Neigung.

Es ist vorgesehen, dass die Erfassungseinrichtung einen Flüssigkeitsbehälter mit einer Flüssigkeit und einen in der Flüssigkeit gelagerten Schwimmkörper aufweist. Der Schwimmkörper ist vorzugsweise drehbar in der Flüssigkeit gelagert. Der Oberflächenspiegel der Flüssigkeit ist stets im Wesentlichen 90° zur Soll-Neigung angeordnet und wird durch die einwirkende Erdanziehungskraft und, in Kurvenlagen durch die Zentrifugalkraft, ausgerichtet. Bei einer Geradeausfahrt ist der Oberflächenspiegel der Flüssigkeit im Wesentlichen 90° zur Erdbeschleunigung ausgerichtet. Bei einer Kurvenfahrt und einer dabei auftretenden Zentrifugalkraft ist der Oberflächenspiegel entsprechend gedreht und im Wesentlichen 90° zur vektoriellen Summe aus der Erdbeschleunigung und der Zentrifugalkraft angeordnet. Der Schwimmkörper folgt dem Oberflächenspiegel der Flüssigkeit und ermöglicht dadurch eine vereinfachte Erfassung der Soll-Neigung. Die Flüssigkeit kann insbesondere Wasser sein. Bei einer Ausführungsform kann das Wasser Zusatzstoffe aufweisen, um dessen Dichte und damit deren Auftriebskraft und die Viskosität zu erhöhen und/oder Keime abzutöten. Der Flüssigkeitsbehälter kann beispielsweise ein Volumen zwischen 0,5 l und 10 l aufweisen. Der Schwimmkörper hat eine geringere Dichte als die Flüssigkeit und erfährt dadurch Auftrieb. Der Schwimmkörper ist bevorzugt an einer Drehachse gelagert. Vorteilhafterweise ist durch die Verwendung einer Flüssigkeit keine elektrische Energiezufuhr zur Stabilisierung der Unterstützungsvorrichtung erforderlich. Gleichgewichtsbeeinträchtigte Personen müssen sich somit nicht darum kümmern, dass eine allfällige Energieversorgung geladen ist und können auch eine unbegrenzte Zeitspanne lang Fahrrad fahren.

Bevorzugt ist, wenn die Erfassungseinrichtung einen Schalthebel aufweist, der mit dem Schwimmkörper derart direkt oder indirekt verbunden ist, dass der Schalthebel bei einer Abweichung der Ist-Neigung von der Soll-Neigung die Betätigungseinheit aktuiert. Der Schalthebel und die Betätigungseinheit sind bevorzugt außerhalb des Flüssigkeitsbehälters angeordnet. Der Schalthebel ist vorzugsweise drehfest mit dem Schwimmkörper verbunden, sodass dieser der Drehung des Schwimmkörpers folgt. Die Betätigungseinheit kann, wie bereits oben beschrieben, für jedes Stabilisierungselement ein Betätigungselement aufweisen, das jeweils mit einem Sperrmechanismus an einem Stabilisierungselement verbunden und dazu eingerichtet ist, den Sperrmechanismus zu aktuieren. Durch die Drehung des Schalthebels können die Betätigungselemente betätigt werden. Auf diese Weise kann die Blockiereinrichtung in die erste, zweite und/oder dritte Stellung gebracht werden.

Günstig ist, wenn zwei Räder vorgesehen sind, die mit dem Basisteil drehbar verbunden sind. Auf diese Weise kann durch Verbindung der Unterstützungsvorrichtung mit einem zweirädrigen Fahrrad ein dreirädriges Fahrrad bereitgestellt werden, das eine erhöhte Stabilität bietet. Die Räder können bei einer Ausführungsform mithilfe eines Elektromotors antreibbar sein. Vorzugsweise besitzen die Räder eine Größe zwischen 15 Zoll und 24 Zoll. Das Basisteil kann des Weiteren eine Bremsvorrichtung für die Räder aufweisen, welche bevorzugt jeweils eine Scheibenbremseinheit für jedes Rad besitzt. Die Räder sind um eine horizontale Drehachse quer zur Geradeausfahrtrichtung der Unterstützungsvorrichtung drehbar. Für Kurvenfahrten können die Räder auch um eine vertikale Achse, d.h. um eine Hochachse, quer zur horizontalen Drehachse und quer zur Geradeausfahrtrichtung neigbar sein. Für besonders günstige Kurvenlagen können die Räder bei einer Ausführungsform der Erfindung auch um eine Achse parallel zur Geradeausfahrtrichtung der Unterstützungsvorrichtung neigbar sein.

Die Erfindung betrifft auch ein Fahrrad, das eine Unterstützungsvorrichtung der oben beschriebenen Art aufweist bzw. mit einer solchen verbunden ist. Die Unterstützungsvorrichtung kann an der Vorderseite oder an der Rückseite des Fahrrads mit diesem verbunden sein.

Die Erfindung betrifft des Weiteren ein Verfahren zum Betreiben einer Unterstützungsvorrichtung der eingangs erwähnten Art, bei dem vorgesehen ist, dass die Erfassungseinrichtung einen Flüssigkeitsbehälter mit einer Flüssigkeit und einen in der Flüssigkeit gelagerten Schwimmkörper aufweist. Die Vorteile, Merkmale und Weiterbildungen der oben beschriebenen Unterstützungseinrichtung sind auf das beschriebene Verfahren übertragbar. Das Verfahren ist vorzugsweise dazu eingerichtet, die oben beschriebene Unterstützungseinrichtung zu betreiben.

Im Folgenden wird die Erfindung anhand von Figuren näher beschrieben, auf die sie jedoch nicht beschränkt sein soll. Es zeigen:
Fig. 1 zeigt ein Fahrrad mit einer Unterstützungsvorrichtung in einer seitlichen Ansicht;
Fig. 2 zeigt das Fahrrad mit der Unterstützungseinrichtung in einer Ansicht von Vorne;
Fig. 3 zeigt die Unterstützungsvorrichtung ebenfalls von Vorne;
Fig. 4A-C die Bewegung eines Schalthebels in unterschiedlichen Fahrsituationen;
Fig. 5A-C das Verhalten der Unterstützungsvorrichtung in unterschiedlichen Fahrsituationen; und
Fig. 6A-B die Aktuierung einer Betätigungseinheit in unterschiedlichen Fahrsituationen.
Fig. 7 zeigt das Fahrrad mit der Unterstützungsvorrichtung in einer Ansicht von Vorne;Fig. 8 zeigt einen Teil des Fahrrads mit der Unterstützungsvorrichtung in einer isometrischen Ansicht.

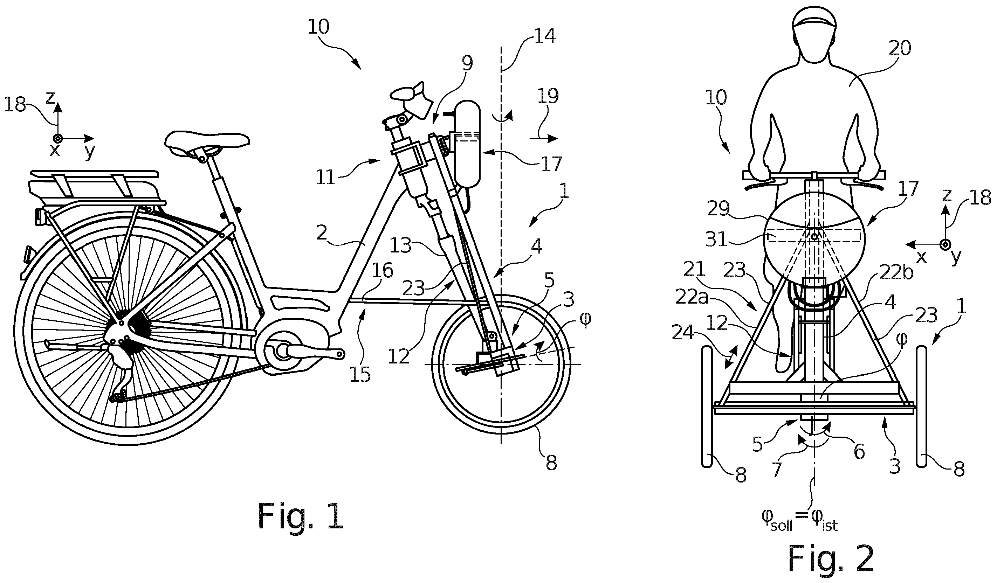

Fig. 1 und Fig. 2 zeigen eine Unterstützungsvorrichtung 1 in einem verbundenen Zustand mit einem Fahrradrahmen 2, sodass ein dreirädriges Fahrrad 10 gebildet wird. Zu diesem Zweck wurde von dem ursprünglich zweirädrigen Fahrrad 10 zuvor das Vorderrad (nicht gezeigt) demontiert, um eine Verbindung mit der Unterstützungsvorrichtung 1 zu ermöglichen. Die Unterstützungsvorrichtung 1 weist ein Basisteil 3, ein Schwenkelement 4 und ein Kippgelenk 5 auf. Das Kippgelenk 5 ermöglicht eine Verschwenkung bzw. Neigung φ des Schwenkelements 4 gegenüber dem Basisteil 3 in eine erste Richtung 6 und in eine zweite Richtung 7, die der ersten Richtung 6 entgegengesetzt ist. An dem Basisteil 3 sind zwei gegenüberliegend angeordnete Räder 8 drehbar befestigt. Um eine Verbindung mit dem Fahrradrahmen 2 herzustellen, ist an dem Schwenkelement 4 ein Verbindungselement 9 angeordnet. Das Verbindungselement 9 ist in der gezeigten Ausführungsform dazu ausgebildet, mit dem Fahrradrahmen 2 verbunden zu werden. Wie in Fig. 1 ersichtlich, ist das Verbindungselement 9 an einem Steuerrohr 11 des Fahrradrahmens 2 befestigt. Um eine Lenkbewegung der Räder 8 zu ermöglichen, ist ein Lenkmechanismus 12 an der Unterstützungsvorrichtung 1 vorgesehen, der mit einer Vorderradgabel 13 des Fahrrads 2 verbunden ist. Die Vorderradgabel 13 überträgt eine Lenkbewegung auf den Lenkmechanismus 12 der Unterstützungsvorrichtung 1, der wiederum die Räder 8 entsprechend um eine Hochachse 14 verdreht. Um die Neigung φ des Schwenkelements 4 zusätzlich auf den Fahrradrahmen 2 zu übertragen, kann zusätzlich ein Übertragungselement 15, beispielsweise in Form einer Strebe 16, vorgesehen sein. Das Übertragungselement 15 kann die Neigung φ unterstützend auf den Fahrradrahmen 2 übertragen. Das Verbindungselement 9 und das Übertragungselement 15 können lösbar mit dem Fahrradrahmen 2 verbunden sein.

Eine Erfassungseinrichtung 17 ist dazu eingerichtet, eine Soll-Neigung φₛₒₗₗ des Schwenkelements 4 gegenüber dem Basisteil 3 zu erfassen. Die Erfassungseinheit 17 ist bevorzugt an dem Schwenkelement 4 angeordnet. Die Soll-Neigung φₛₒₗₗ ist eine Neigung φ des Schwenkelements 4, bei der ein die Unterstützungsvorrichtung 1 aufweisendes Fahrrad 10 ideal gemäß der jeweiligen Fahrsituation ausgerichtet ist, sodass ein Umkippen der Unterstützungsvorrichtung 1 bzw. des Fahrrads 10 verhindert wird. In einem rechtshändigen Koordinatensystem 18 mit den rechtwinkelig zueinander ausgerichteten Achsen X, Y und Z betrachtet, in dem Erdbeschleunigung g parallel zu der Z-Achse liegt und die Fahrtrichtung 19 des mit der Unterstützungsvorrichtung 1 verbundenen Fahrradrahmens 2 in der Y-Z-Ebene liegt, ist die Soll-Neigung φₛₒₗₗ des Schwenkelements 4 eine Neigung φ, in der die Normalprojektion der vektoriellen Summe aus der Erdbeschleunigung g und einer allfälligen Zentrifugalbeschleunigung z in die X-Z-Ebene und die Normalprojektion der Neigung φ des Schwenkelements 4 in die X-Z-Ebene im Wesentlichen parallel ausgerichtet sind. Sowohl die Erdbeschleunigung g, als auch die Zentrifugalbeschleunigung z erzeugen jeweils eine Kraft, die auf die fahrende Person 20 (siehe Fig. 2), den Fahrradrahmen 2 und die Unterstützungsvorrichtung 1, insbesondere die Erfassungseinheit 17, wirkt. Beim Geradeausfahren des Fahrrads 2 mit der Unterstützungsvorrichtung 1 auf einer ebenen Fläche weist die Normalprojektion der Soll-Neigung φₛₒₗₗ in die X-Z Ebene keine X-Komponente auf, da keine Zentrifugalbeschleunigung z vorhanden ist. Bei einer Kurvenfahrt weist die Normalprojektion der Soll-Neigung aufgrund der Zentrifugalbeschleunigung z eine X-Komponente in die X-Z-Ebene auf, in der das gemäß der Soll-Neigung ausgerichtete Schwenkelement 4 die Zentrifugalkraft kompensiert. Wenn die Ist-Neigung φᵢₛₜ der Soll-Neigung φₛₒₗₗ entspricht, verläuft die Verbindungslinie, in die X-Z-Ebene projiziert, zwischen dem Schwerpunkt S des aus der Unterstützungsvorrichtung 1, dem damit verbundenen Fahrradrahmen 2 und der fahrenden Person 20 parallel zur vektoriellen Summe aus Zentrifugalbeschleunigung z und Erdbeschleunigung g.

Mithilfe einer Blockiereinrichtung 21 kann eine Verschwenkung des Schwenkelements 4 in die erste 6 und/oder zweite Richtung 7 blockiert oder freigegeben werden. Die Blockiereinrichtung 21 ist insbesondere dazu eingerichtet, in einer ersten Stellung eine Neigung φ des Schwenkelements 4 gegenüber dem Basisteil 3 in die erste Richtung 6 zu erlauben und in eine zweite Richtung 7 zu blockieren, und in einer zweiten Stellung eine Neigung φ des Schwenkelements 4 gegenüber dem Basisteil 3 in die zweite Richtung 7 zu erlauben und in die erste Richtung 6 zu blockieren. In einer dritten Stellung ist eine Neigung φ in beide Richtungen 6,7 blockiert.

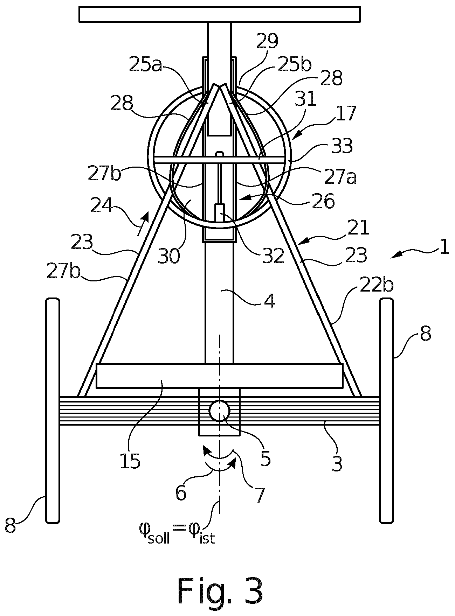

Wie in Fig. 2 ersichtlich weist die Blockiereinrichtung 21 zwei gegenüberliegende zusammenschiebbare und ausziehbare Stabilisierungselemente 22a, 22b, nämlich ein erstes Stabilisierungselement 22a und ein zweites Stabilisierungselement 22b, in Form von Gasdruckfedern 23 auf, die in eine jeweilige Auszugsrichtung 24 vorgespannt sind, also eine Kraft in die Auszugsrichtung 24 ausüben. Jedes Stabilisierungselement 22a, 22b weist einen Sperrmechanismus 25a, 25b auf, wie in Fig. 3 ersichtlich. Der Sperrmechanismus 25a, 25b ist dazu eingerichtet, in einer Sperrstellung ein Zusammenschieben des jeweiligen Stabilisierungselements 22a, 22b zu blockieren und in einer Freigabestellung ein Zusammenschieben des jeweiligen Stabilisierungselements 22a, 22b zu ermöglichen. In der ersten Stellung befindet sich das erste Stabilisierungselement 22a in der Freigabestellung, während sich das Stabilisierungselement 22b in der Sperrstellung befindet. In der zweiten Stellung befindet sich das zweite Stabilisierungselement 22b in der Freigabestellung, während sich das Stabilisierungselement 22b in der Sperrstellung befindet.

Zum Aktivieren der ersten, zweiten und/oder dritten Stellung ist, wie ebenfalls in Fig. 3 ersichtlich, eine Betätigungseinheit 26 zum Aktivieren der ersten, zweiten und/oder dritten Stellung vorgesehen. Die Betätigungseinheit 26 ist in der gezeigten Darstellung an dem Schwenkelement 4 angeordnet und weist ein erstes Betätigungselement 27a und ein zweites Betätigungselement 27b auf, die über Bowdenzüge 28 mit dem Sperrmechanismus 25a bzw. 25b verbunden sind. Die Betätigungselemente 27a, 27b können als Druckknöpfe ausgestaltet sein. Das erste Betätigungselement 27a ist am Schwenkelement 4 auf der dem zweiten Stabilisierungselements 22b zugeordneten Seite angeordnet. Das zweite Betätigungselement 27b ist am Schwenkelement 4 auf der dem ersten Stabilisierungselement 22a zugeordneten Seite angeordnet. Mit Hilfe des ersten Betätigungselements 27a kann die Blockiereinrichtung 21 in die erste Stellung gebracht werden, indem das erste Stabilisierungselement 22a in die Freigabestellung gebracht wird. Mit Hilfe des zweiten Betätigungselements 27b kann die Blockiereinrichtung in die zweite Stellung gebracht werden, indem das zweite Stabilisierungselement 22b in die Freigabestellung gebracht wird. Wenn weder das erste 27a, noch das zweite Betätigungselement 27b betätigt werden, befindet sich die Blockiereinrichtung 21 in der dritten Stellung.

Um die Betätigungseinheit 26 zu aktuieren, ist die Erfassungseinrichtung 17 dazu eingerichtet, im Falle einer Abweichung der Ist-Neigung φᵢₛₜ von der Soll-Neigung φₛₒₗₗ die Blockiereinrichtung 13 die Betätigungselemente 27a, 27b zu aktuieren und dadurch die Blockiereinrichtung 21 in die erste oder zweite Stellung zu bringen. Wenn die Ist-Neigung φᵢₛₜ der Soll-Neigung φₛₒₗₗ entspricht, bringt die Erfassungseinheit 17 die Blockiereinrichtung in die dritte Stellung. Um die Soll-Neigung φₛₒₗₗ zu erfassen und Betätigungselemente 27a, 27b entsprechend zu aktuieren, weist die Erfassungseinheit 17 in der gezeigten Darstellung einen runden Flüssigkeitsbehälter 29 mit einer Flüssigkeit 30, einen in der Flüssigkeit drehbar gelagerten Schwimmkörper 31 und einen Schalthebel 32 auf. Der Schalthebel 32 ist drehfest mit dem Schwimmkörper 31 verbunden und im Wesentlichen 90° zu diesem angeordnet. Der Schalthebel 32 ist dazu eingerichtet, im Fall einer Abweichung der Ist-Neigung φᵢₛₜ von der Soll-Neigung φₛₒₗₗ auf ein Betätigungselement 27a, 27b zu drücken. Der Oberflächenspiegel 33 der Flüssigkeit 30 in dem Flüssigkeitsbehälter 29 wird durch die Erdbeschleunigung g und eine allfällige Zentrifugalbeschleunigung z stets im Wesentlichen 90° zur Soll-Neigung φₛₒₗₗ ausgerichtet. Der Schwimmkörper 31 folgt dem Oberflächenspiegel 33, sodass der Schalthebel 32 parallel zur Soll-Neigung φₛₒₗₗ ausgerichtet ist. Die Betätigungselemente 27a, 27b sind nun derart am Schwenkelement 4 angeordnet, dass im Falle einer Abweichung der Ist-Neigung φᵢₛₜ von der Soll-Neigung φₛₒₗₗ der Schalthebel 32 gegen das entsprechende Betätigungselement 27a, 27b drückt und dieses das entsprechend zugeordnete Stabilisierungselement 22a, 22b in die Freigabestellung bringt, sodass die fahrende Person 20 durch Ausgleichsbewegungen das Schwenkelement 4 näher an die Soll-Neigung φₛₒₗₗ heranführen kann, aber eine Vergrößerung der Abweichung zwischen der Ist-Neigung φᵢₛₜ und der Soll-Neigung φₛₒₗₗ blockiert wird. Durch den Schalthebel 32 wird die Blockiereinrichtung 21 in die erste, zweite und/oder dritte Stellung gebracht.

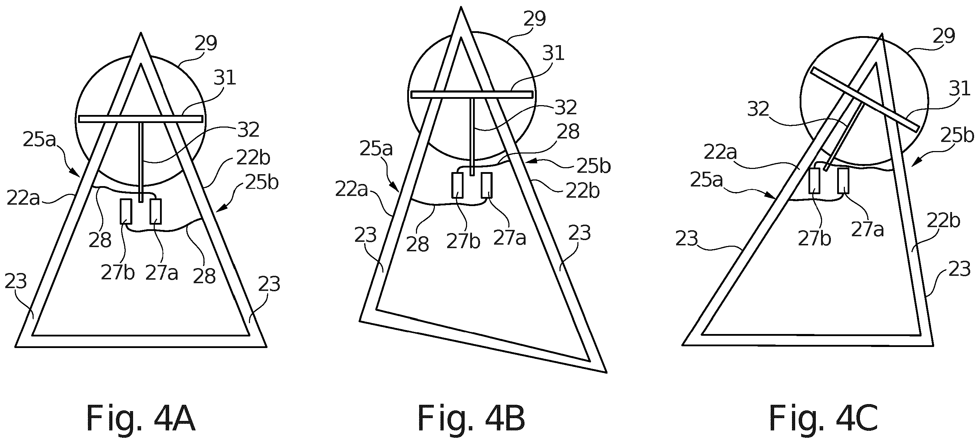

Fig. 4A-C veranschaulichen die Bewegung des Schalthebels 32 in unterschiedlichen Fahrsituationen.

Fig. 4A zeigt den Schalthebel 32 bei einer Geradeausfahrt der Unterstützungsvorrichtung 1 auf einem ebenen Untergrund. Der Schalthebel 32 ist vertikal ausgerichtet. Die Stabilisierungselemente 22a, 22b sind hinsichtlich der Länge gleich weit ausgezogen.

Fig. 4B zeigt den Schalthebel 32 bei einer Geradeausfahrt auf schiefem Untergrund. Der Schalthebel 32 ist vertikal ausgerichtet und drückt auf das Betätigungselement 27a, das den Sperrmechanismus 25a betätigt und dadurch eine Verkürzung des Stabilisierungselements 22a ermöglicht. Das Stabilisierungselement 22a wird gegenüber dem Stabilisierungselement 22b verkürzt.

Fig. 4C zeigt den Schalthebel 32 bei einer Kurvenfahrt auf schiefem Untergrund. Der Schalthebel 32 ist schräg zur Vertikalen angeordnet und drückt auf das Betätigungselement 27b, das den Sperrmechanismus 25b betätigt und dadurch eine Verkürzung des Stabilisierungselements 22b ermöglicht.

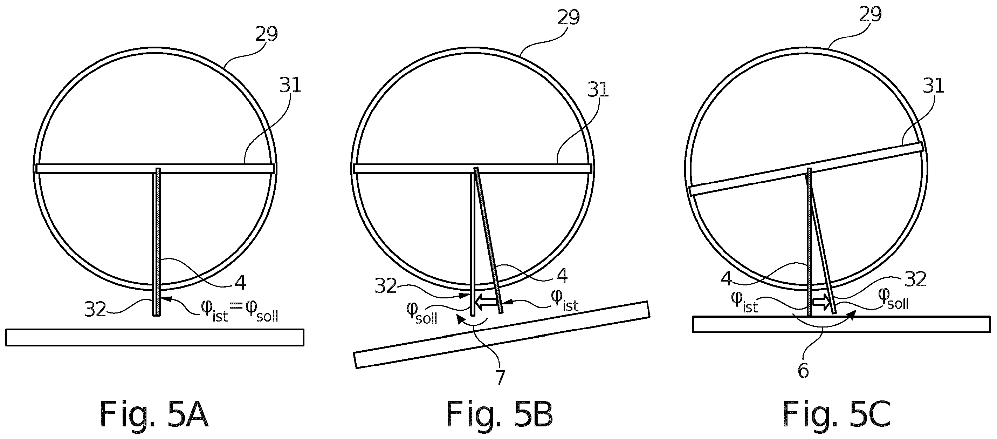

Fig. 5A-C veranschaulichen das Verhalten der Unterstützungsvorrichtung in unterschiedlichen Fahrsituationen.

Fig. 5A zeigt einen Schalthebel 32 und ein Schwenkelement 4 in der Soll-Neigung φₛₒₗₗ bei einer Geradeausfahrt der Unterstützungsvorrichtung 1 auf ebenem Untergrund.

Fig. 5B zeigt einen Schalthebel 32 und ein Schwenkelement 4 in einer Ist-Neigung, die von einer Soll-Neigung φₛₒₗₗ abweicht bei einer Geradeausfahrt der Unterstützungsvorrichtung 1 auf schiefem Untergrund. Die fahrende Person 20 kann das Schwenkelement 4 in die zweite Richtung 7 bewegen, um die Abweichung zwischen der Soll-Neigung φₛₒₗₗ und der Ist-Neigung φᵢₛₜ zu reduzieren. Eine Bewegung in die erste Richtung 6 wird durch die Blockiereinrichtung 21 blockiert.

Fig. 5C zeigt einen Schalthebel 32 und ein Schwenkelement 4 in einer Ist-Neigung, die von einer Soll-Neigung φₛₒₗₗ abweicht bei einer Kurvenfahrt der Unterstützungsvorrichtung 1 auf ebenem Untergrund. Die fahrende Person 20 kann das Schwenkelement 4 in die erste Richtung 6 bewegen, um die Abweichung zwischen der Soll-Neigung φₛₒₗₗ und der Ist-Neigung φᵢₛₜ zu reduzieren. Eine Bewegung in die zweite Richtung 7 wird durch die Blockiereinrichtung 21 blockiert.

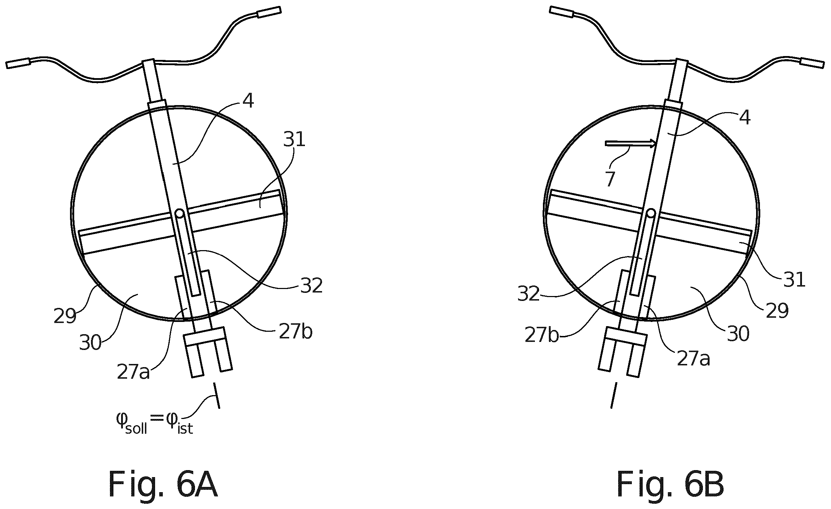

Fig. 6A-B zeigen ebenfalls die Aktuierung der Betätigungseinheit 26 in unterschiedlichen Fahrsituationen.

Fig. 6A zeigt eine Kurvenfahrt der Unterstützungsvorrichtung 1, bei der sich das Schwenkelement 4 in der Soll-Neigung φₛₒₗₗ befindet. Keines der Betätigungselemente 27a, 27b wird durch den Schalthebel 32 betätigt.

Fig. 6B zeigt eine Kurvenfahrt der Unterstützungsvorrichtung 1, bei der sich das Schwenkelement 4 in einer Ist-Neigung φᵢₛₜ befindet, die von der Soll-Neigung φₛₒₗₗ abweicht. Der Schalthebel 32 drückt auf das Betätigungselement 27b, sodass das Schwenkelement in die zweite Richtung 7 geneigt werden kann.

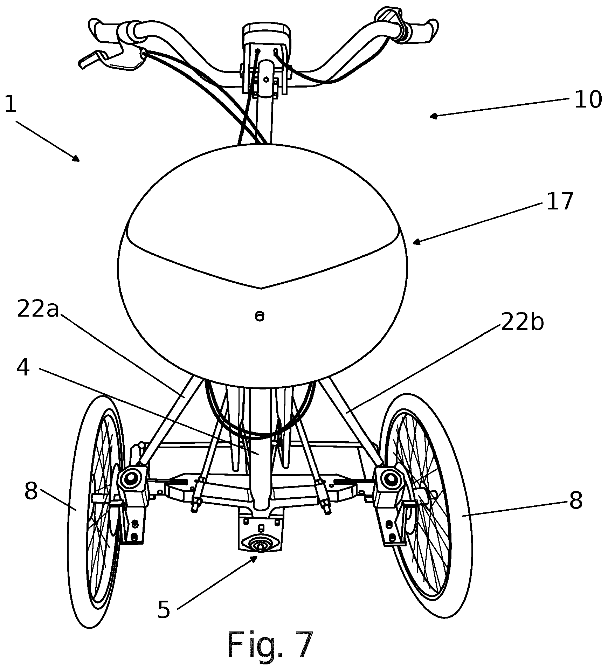

Fig. 7 zeigt die Unterstützungsvorrichtung 1 bei einer Geradeausfahrt auf ebenem Untergrund. Dabei sind die Stabilisierungselemente 22a, 22b hinsichtlich der Länge gleich weit ausgezogen. Das Schwenkelement 4 befindet sich in einer Ist-Neigung φᵢₛₜ, welche nicht von der Soll-Neigung φₛₒₗₗ abweicht.

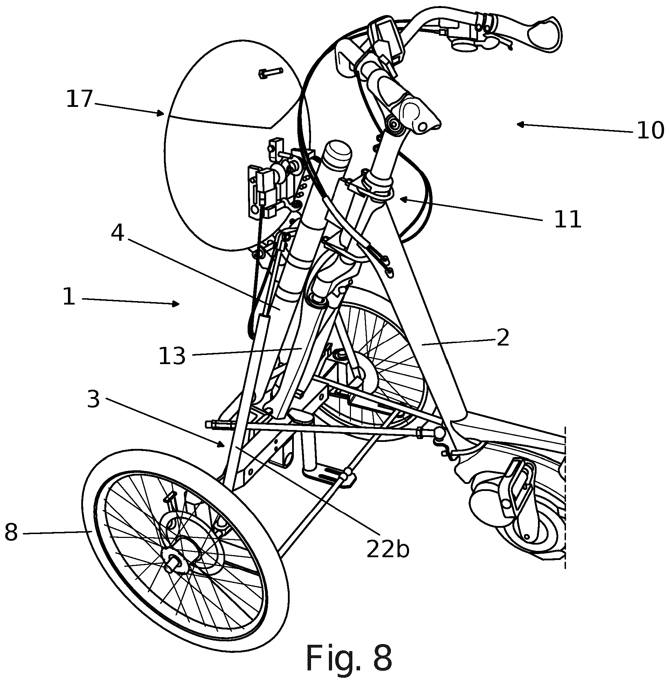

Fig. 8 zeigt einen Teil des Fahrrads 10 mit der Unterstützungsvorrichtung 1 bei einer Geradeausfahrt auf ebenem Untergrund. Dabei befindet sich das Schwenkelement 4 in einer Ist-Neigung φᵢₛₜ, welche nicht von der Soll-Neigung φₛₒₗₗ abweicht. Die Stabilisierungselemente 22a, 22b sind hinsichtlich der Länge gleich weit ausgezogen.

## Patentansprüche

1. Unterstützungsvorrichtung (1) für ein Fahrrad (10), insbesondere zum Unterstützen einer fahrenden Person (20) beim Auffinden und Halten des Gleichgewichts, aufweisend:
ein Basisteil (3);
ein Schwenkelement (4);
ein am Schwenkelement (4) angeordnetes Verbindungselement (9) zur Verbindung mit einem Bauteil des Fahrrads (10), insbesondere einem Fahrradrahmen (2), einem Steuerrohr (11) oder einer Gabel des Fahrrads (10);
ein Kippgelenk (5), das mit dem Basisteil (3) und dem Schwenkelement (4) verbunden ist und eine Neigung des Schwenkelements (4) gegenüber dem Basisteil (3) ermöglicht;
eine Blockiereinrichtung (21) zum Blockieren einer Neigung (φ) des Schwenkelements (4) gegenüber dem Basisteil (3) in zumindest eine Richtung (6,7); und
eine Erfassungseinrichtung (17) zum Erfassen einer Soll-Neigung (φₛₒₗₗ) des Schwenkelements (4) gegenüber dem Basisteil (3), wobei die Erfassungseinrichtung (17) dazu eingerichtet ist, im Falle einer Abweichung einer Ist-Neigung (φᵢₛₜ) des Schwenkelements (4) gegenüber dem Basisteil (3) von der Soll-Neigung (φₛₒₗₗ) die Blockiereinrichtung (21) derart anzusteuern, dass eine Neigung (φ) des Schwenkelements (4) gegenüber dem Basisteil (3), die zu einer Vergrößerung der Abweichung der Ist-Neigung (φᵢₛₜ) von der Soll-Neigung (φₛₒₗₗ) führt, blockiert wird und eine Neigung (φ) des Schwenkelements (4) gegenüber dem Basisteil (3), die zu einer Reduktion der Abweichung der Ist-Neigung (φᵢₛₜ) von der Soll-Neigung (φₛₒₗₗ) führt, ermöglicht wird,
**dadurch gekennzeichnet, dass**
die Erfassungseinrichtung (17) einen Flüssigkeitsbehälter (29) mit einer Flüssigkeit (30) und einen in der Flüssigkeit (30) gelagerten Schwimmkörper (31) aufweist.

2. Unterstützungsvorrichtung (1) nach Anspruch 1, **dadurch gekennzeichnet, dass** die Blockiereinrichtung (21) dazu eingerichtet ist, in einer ersten Stellung eine Neigung (φ) des Schwenkelements (4) gegenüber dem Basisteil (3) in eine erste Richtung (6) zu erlauben und in eine zweite Richtung (7) zu blockieren, und in einer zweiten Stellung eine Neigung des Schwenkelements (4) gegenüber dem Basisteil (3) in die zweite Richtung (7) zu erlauben und in die erste Richtung (6) zu blockieren.

3. Unterstützungsvorrichtung (1) nach Anspruch 2, **dadurch gekennzeichnet, dass** eine Betätigungseinheit (26) zum Aktivieren der ersten und/oder zweiten Stellung vorgesehen ist, wobei die Betätigungseinheit (26) insbesondere über einen Bowdenzug(28), ein Gestänge oder eine Hydraulikleitung mit der Blockiereinrichtung (21) verbunden ist.

4. Unterstützungsvorrichtung (1) nach Anspruch 3, **dadurch gekennzeichnet, dass** die Betätigungseinheit (26) an dem Schwenkelement (4) angeordnet ist.

5. Unterstützungsvorrichtung (1) nach einem der Ansprüche 3 oder 4, **dadurch gekennzeichnet, dass** die Erfassungseinrichtung (17) einen Schalthebel (32) aufweist, der mit dem Schwimmkörper (31) derart direkt oder indirekt verbunden ist, dass der Schalthebel (32) bei einer Abweichung der Ist-Neigung (φᵢₛₜ) von der Soll-Neigung (φₛₒₗₗ) die Betätigungseinheit (26) aktuiert.

6. Unterstützungsvorrichtung (1) nach einem der Ansprüche 1 bis 5, **dadurch gekennzeichnet, dass** die Blockiereinrichtung (21) zumindest ein ausziehbares und zusammenschiebbares, insbesondere teleskopierbares, Stabilisierungselement (22a, 22b) aufweist, das mit dem Basisteil (3) und dem Schwenkelement (4) verbunden ist.

7. Unterstützungsvorrichtung (1) nach einem der Ansprüche 2 bis 5 und Anspruch 6, **dadurch gekennzeichnet, dass** ein Sperrmechanismus (25a, 25b) an dem zumindest einen Stabilisierungselement (22a, 22b) angeordnet ist, wobei der Sperrmechanismus (25a, 25b) dazu eingerichtet ist, in einer Sperrstellung ein Zusammenschieben des Stabilisierungselements (22a, 22b) zu blockieren und in einer Freigabestellung ein Zusammenschieben des Stabilisierungselements (22a, 22b) zu ermöglichen.

8. Unterstützungsvorrichtung (1) nach Anspruch 6 oder 7, **dadurch gekennzeichnet, dass** das zumindest eine Stabilisierungselement (22a, 22b) eine Gasdruckfeder (23) ist.

9. Unterstützungsvorrichtung (1) nach einem der Ansprüche 6 bis 8, **dadurch gekennzeichnet, dass** die Blockiereinrichtung (21) zwei Stabilisierungselemente (22a, 22b) aufweist, die vorzugsweise an gegenüberliegenden Seiten des Schwenkelements (4) angeordnet sind.

10. Unterstützungsvorrichtung (1) nach den Ansprüchen 3 oder 4, 7 und 9, **dadurch gekennzeichnet, dass** die Betätigungseinheit (26) zwei Betätigungselemente (27a, 27b) aufweist und jeweils ein Sperrmechanismus (25a, 25b) an jedem Stabilisierungselement (22a, 22b) vorgesehen ist, wobei die Betätigungselemente (27a, 27b) jeweils mit einem Sperrmechanismus (25a, 25b) an einem Stabilisierungselement (22a, 22b) verbunden sind und dazu eingerichtet sind, die Sperrmechanismen (25a, 25b) zu aktuieren.

11. Unterstützungsvorrichtung (1) nach einem der Ansprüche 1 bis 10, **dadurch gekennzeichnet, dass** der Schwimmkörper (31) in der Flüssigkeit (30) drehbar gelagert ist.

12. Unterstützungsvorrichtung (1) nach einem der Ansprüche 1 bis 11, **dadurch gekennzeichnet, dass** zwei Räder (8) vorgesehen sind, die mit dem Basisteil (3) drehbar verbunden sind.

13. Fahrrad (10), **dadurch gekennzeichnet, dass** das Fahrrad (10) eine Unterstützungsvorrichtung (1) nach einem der Ansprüche 1 bis 12 aufweist.

14. Verfahren zum Betreiben einer Unterstützungsvorrichtung (1) für ein Fahrrad (10), insbesondere zum Unterstützen einer fahrenden Person (20) beim Auffinden und Halten des Gleichgewichts, wobei die Unterstützungsvorrichtung Folgendes aufweist:
ein Basisteil (3);
ein Schwenkelement (4);
ein am Schwenkelement (4) angeordnetes Verbindungselement (9) zur Verbindung mit einem Bauteil des Fahrrads, insbesondere einem Fahrradrahmen (2), einem Steuerrohr (11) oder einer Gabel des Fahrrads (10);
ein Kippgelenk (5), das mit dem Basisteil (3) und dem Schwenkelement (4) verbunden ist und eine Neigung des Schwenkelements (4) gegenüber dem Basisteil (3) ermöglicht;
eine Blockiereinrichtung (21) zum Blockieren einer Neigung (φ) des Schwenkelements (4) gegenüber dem Basisteil (3) in zumindest eine Richtung (6, 7); und
eine Erfassungseinrichtung (17) zum Erfassen einer Soll-Neigung (φₛₒₗₗ) des Schwenkelements (4) gegenüber dem Basisteil (3), wobei die Erfassungseinrichtung (17) mit der Blockiereinrichtung (21) verbunden ist im Falle einer Abweichung einer Ist-Neigung (φᵢₛₜ) des Schwenkelements (4) gegenüber dem Basisteil (3) von der Soll-Neigung (φₛₒₗₗ) die Blockiereinrichtung (21) derart ansteuert, dass eine Neigung (φ) des Schwenkelements (4) gegenüber dem Basisteil (3), die zu einer Vergrößerung der Abweichung der Ist-Neigung (φᵢₛₜ) von der Soll-Neigung (φₛₒₗₗ) führt, blockiert wird und eine Neigung (φ) des Schwenkelements (4) gegenüber dem Basisteil (3), die zu einer Reduktion der Abweichung der Ist-Neigung (φᵢₛₜ) von der Soll-Neigung (φₛₒₗₗ) führt, ermöglicht wird, **dadurch gekennzeichnet, dass**
die Erfassungseinrichtung (17) einen Flüssigkeitsbehälter (29) mit einer Flüssigkeit (30) und einen in der Flüssigkeit (30) gelagerten Schwimmkörper (31) aufweist.

## Claims

1. Support device (1) for a bicycle (10), in particular for supporting a riding person (20) in finding and maintaining balance, comprising:
a base part (3);
a pivot element (4);
a connecting element (9) arranged on the pivot element (4) for connection with a component of the bicycle (10), in particular a bicycle frame (2), a head tube (11) or a fork of the bicycle (10);
a tilt joint (5) that is connected to the base part (3) and the pivot element (4) and enables an inclination of the pivot element (4) relative to the base part (3);
a blocking device (21) for blocking an inclination (φ) of the pivot element (4) relative to the base part (3) in at least one direction (6, 7); and
a detection device (17) for detecting a target inclination (φₛₒₗₗ) of the pivot element (4) relative to the base part (3), wherein the detection device (17) is configured, in the event of a deviation of an actual inclination (φᵢₛₜ) of the pivot element (4) relative to the base part (3) from the target inclination (φₛₒₗₗ), to control the blocking device (21) in such a way that an inclination (φ) of the pivot element (4) relative to the base part (3) that leads to an increase in the deviation of the actual inclination (φᵢₛₜ) from the target inclination (φₛₒₗₗ) is blocked and an inclination (φ) of the pivot element (4) relative to the base part (3) that leads to a reduction of the deviation of the actual inclination (φᵢₛₜ) from the target inclination (φₛₒₗₗ) is enabled,
**characterized in that**
the detection device (17) comprises a liquid container (29) with a liquid (30) and a floating body (31) supported in the liquid (30).

2. Support device (1) according to claim 1, **characterized in that** the blocking device (21) is configured, in a first position, to allow an inclination (φ) of the pivot element (4) relative to the base part (3) in a first direction (6) and to block it in a second direction (7), and in a second position, to allow an inclination of the pivot element (4) relative to the base part (3) in the second direction (7) and to block it in the first direction (6).

3. Support device (1) according to claim 2, **characterized in that** an actuation unit (26) is provided for activating the first and/or second position, wherein the actuation unit (26) is connected to the blocking device (21) in particular via a Bowden cable (28), a linkage or a hydraulic line.

4. Support device (1) according to claim 3, **characterized in that** the actuation unit (26) is arranged on the pivot element (4).

5. Support device (1) according to one of claims 3 or 4, **characterized in that** the detection device (17) comprises a control lever (32) that is directly or indirectly connected to the floating body (31) in such a way that the control lever (32) actuates the actuation unit (26) when there is a deviation of the actual inclination (φᵢₛₜ) from the target inclination (φₛₒₗₗ).

6. Support device (1) according to one of claims 1 to 5, **characterized in that** the blocking device (21) comprises at least one extendable and retractable, in particular telescopic, stabilizing element (22a, 22b) that is connected to the base part (3) and the pivot element (4).

7. Support device (1) according to one of claims 2 to 5 and claim 6, **characterized in that** a locking mechanism (25a, 25b) is arranged on the at least one stabilizing element (22a, 22b), wherein the locking mechanism (25a, 25b) is configured, in a locked position, to block a retraction of the stabilizing element (22a, 22b) and, in a release position, to enable a retraction of the stabilizing element (22a, 22b).

8. Support device (1) according to claim 6 or 7, **characterized in that** the at least one stabilizing element (22a, 22b) is a gas pressure spring (23).

9. Support device (1) according to one of claims 6 to 8, **characterized in that** the blocking device (21) comprises two stabilizing elements (22a, 22b) that are preferably arranged on opposite sides of the pivot element (4).

10. Support device (1) according to claims 3 or 4, 7 and 9, **characterized in that** the actuation unit (26) comprises two actuation elements (27a, 27b) and a locking mechanism (25a, 25b) is provided on each stabilizing element (22a, 22b), wherein the actuation elements (27a, 27b) are each connected to a locking mechanism (25a, 25b) on a stabilizing element (22a, 22b) and are configured to actuate the locking mechanisms (25a, 25b).

11. Support device (1) according to one of claims 1 to 10, **characterized in that** the floating body (31) is rotatably supported in the liquid (30).

12. Support device (1) according to one of claims 1 to 11, **characterized in that** two wheels (8) are provided that are rotatably connected to the base part (3).

13. Bicycle (10), **characterized in that** the bicycle (10) comprises a support device (1) according to one of claims 1 to 12.

14. Method for operating a support device (1) for a bicycle (10), in particular for supporting a riding person (20) in finding and maintaining balance, wherein the support device comprises the following:
a base part (3);
a pivot element (4);
a connecting element (9) arranged on the pivot element (4) for connection with a component of the bicycle, in particular a bicycle frame (2), a head tube (11) or a fork of the bicycle (10) ;
a tilt joint (5) that is connected to the base part (3) and the pivot element (4) and enables an inclination of the pivot element (4) relative to the base part (3);
a blocking device (21) for blocking an inclination (φ) of the pivot element (4) relative to the base part (3) in at least one direction (6, 7); and
a detection device (17) for detecting a target inclination (φₛₒₗₗ) of the pivot element (4) relative to the base part (3), wherein the detection device (17) is connected to the blocking device (21) and, in the event of a deviation of an actual inclination (φᵢₛₜ) of the pivot element (4) relative to the base part (3) from the target inclination (φₛₒₗₗ), controls the blocking device (21) in such a way that an inclination (φ) of the pivot element (4) relative to the base part (3) that leads to an increase in the deviation of the actual inclination (φᵢₛₜ) from the target inclination (φₛₒₗₗ) is blocked and an inclination (φ) of the pivot element (4) relative to the base part (3) that leads to a reduction of the deviation of the actual inclination (φᵢₛₜ) from the target inclination (φₛₒₗₗ) is enabled,
**characterized in that**
the detection device (17) comprises a liquid container (29) with a liquid (30) and a floating body (31) supported in the liquid (30).

## Revendications

1. Dispositif de support (1) pour une bicyclette (10), notamment pour aider une personne en déplacement (20) à trouver et maintenir l'équilibre, comprenant :
une partie de base (3) ;
un élément pivotant (4) ;
un élément de connexion (9) disposé sur l'élément pivotant (4) pour la connexion avec un composant de la bicyclette (10), notamment un cadre de bicyclette (2), un tube de direction (11) ou une fourche de la bicyclette (10) ;
une articulation basculante (5) qui est reliée à la partie de base (3) et à l'élément pivotant (4) et permet une inclinaison de l'élément pivotant (4) par rapport à la partie de base (3) ;
un dispositif de blocage (21) pour bloquer une inclinaison (φ) de l'élément pivotant (4) par rapport à la partie de base (3) dans au moins une direction (6, 7) ; et
un dispositif de détection (17) pour détecter une inclinaison de consigne (φₛₒₗₗ) de l'élément pivotant (4) par rapport à la partie de base (3), le dispositif de détection (17) étant configuré, en cas d'écart entre une inclinaison réelle (φᵢₛₜ) de l'élément pivotant (4) par rapport à la partie de base (3) et l'inclinaison de consigne (φₛₒₗₗ), pour commander le dispositif de blocage (21) de manière à bloquer une inclinaison (φ) de l'élément pivotant (4) par rapport à la partie de base (3) entraînant une augmentation de l'écart entre l'inclinaison réelle (φᵢₛₜ) et l'inclinaison de consigne (φₛₒₗₗ), et à permettre une inclinaison (φ) de l'élément pivotant (4) par rapport à la partie de base (3) entraînant une réduction de l'écart entre l'inclinaison réelle (φᵢₛₜ) et l'inclinaison de consigne (φₛₒₗₗ),
**caractérisé en ce que** le dispositif de détection (17) comprend un réservoir de liquide (29) contenant un liquide (30) et un corps flottant (31) disposé dans le liquide (30).

2. Dispositif de support (1) selon la revendication 1, **caractérisé en ce que** le dispositif de blocage (21) est configuré, dans une première position, pour permettre une inclinaison (φ) de l'élément pivotant (4) par rapport à la partie de base (3) dans une première direction (6) et pour la bloquer dans une seconde direction (7),
et, dans une seconde position, pour permettre une inclinaison de l'élément pivotant (4) par rapport à la partie de base (3) dans la seconde direction (7) et pour la bloquer dans la première direction (6).

3. Dispositif de support (1) selon la revendication 2, **caractérisé en ce qu'**une unité d'actionnement (26) est prévue pour activer la première et/ou la seconde position, l'unité d'actionnement (26) étant notamment reliée au dispositif de blocage (21) par un câble Bowden (28), une tringlerie ou une conduite hydraulique.

4. Dispositif de support (1) selon la revendication 3, **caractérisé en ce que** l'unité d'actionnement (26) est disposée sur l'élément pivotant (4).

5. Dispositif de support (1) selon l'une des revendications 3 ou 4, **caractérisé en ce que** le dispositif de détection (17) comprend un levier de commande (32) qui est relié directement ou indirectement au corps flottant (31) de manière à ce que le levier de commande (32) actionne l'unité d'actionnement (26) en cas d'écart entre l'inclinaison réelle (φᵢₛₜ) et l'inclinaison de consigne (φₛₒₗₗ).

6. Dispositif de support (1) selon l'une des revendications 1 à 5, **caractérisé en ce que** le dispositif de blocage (21) comprend au moins un élément de stabilisation (22a, 22b) extensible et compressible, notamment télescopique, qui est relié à la partie de base (3) et à l'élément pivotant (4).

7. Dispositif de support (1) selon l'une des revendications 2 à 5 et la revendication 6, **caractérisé en ce qu'**un mécanisme de verrouillage (25a, 25b) est disposé sur l'au moins un élément de stabilisation (22a, 22b), le mécanisme de verrouillage (25a, 25b) étant configuré, dans une position de verrouillage, pour bloquer la compression de l'élément de stabilisation (22a, 22b) et, dans une position de libération, pour permettre la compression de l'élément de stabilisation (22a, 22b).

8. Dispositif de support (1) selon la revendication 6 ou 7, **caractérisé en ce que** l'au moins un élément de stabilisation (22a, 22b) est un vérin à gaz (23).

9. Dispositif de support (1) selon l'une des revendications 6 à 8, **caractérisé en ce que** le dispositif de blocage (21) comprend deux éléments de stabilisation (22a, 22b) qui sont de préférence disposés sur des côtés opposés de l'élément pivotant (4).

10. Dispositif de support (1) selon les revendications 3 ou 4, 7 et 9, **caractérisé en ce que** l'unité d'actionnement (26) comprend deux éléments d'actionnement (27a, 27b) et qu'un mécanisme de verrouillage (25a, 25b) est prévu sur chaque élément de stabilisation (22a, 22b), les éléments d'actionnement (27a, 27b) étant chacun reliés à un mécanisme de verrouillage (25a, 25b) sur un élément de stabilisation (22a, 22b) et étant configurés pour actionner les mécanismes de verrouillage (25a, 25b).

11. Dispositif de support (1) selon l'une des revendications 1 à 10, **caractérisé en ce que** le corps flottant (31) est monté de manière rotative dans le liquide (30).

12. Dispositif de support (1) selon l'une des revendications 1 à 11, **caractérisé en ce que** deux roues (8) sont prévues, qui sont reliées de manière rotative à la partie de base (3).

13. Bicyclette (10), **caractérisée en ce que** la bicyclette (10) comprend un dispositif de support (1) selon l'une des revendications 1 à 12.

14. Procédé d'exploitation d'un dispositif de support (1) pour une bicyclette (10), notamment pour aider une personne en déplacement (20) à trouver et maintenir l'équilibre, le dispositif de support comprenant :
une partie de base (3) ;
un élément pivotant (4) ;
un élément de connexion (9) disposé sur l'élément pivotant (4) pour la connexion avec un composant de la bicyclette, notamment un cadre de bicyclette (2), un tube de direction (11) ou une fourche de la bicyclette (10) ;
une articulation basculante (5) qui est reliée à la partie de base (3) et à l'élément pivotant (4) et permet une inclinaison de l'élément pivotant (4) par rapport à la partie de base (3) ;
un dispositif de blocage (21) pour bloquer une inclinaison (φ) de l'élément pivotant (4) par rapport à la partie de base (3) dans au moins une direction (6, 7) ; et
un dispositif de détection (17) pour détecter une inclinaison de consigne (φₛₒₗₗ) de l'élément pivotant (4) par rapport à la partie de base (3), le dispositif de détection (17) étant relié au dispositif de blocage (21) et, en cas d'écart entre une inclinaison réelle (φᵢₛₜ) de l'élément pivotant (4) par rapport à la partie de base (3) et l'inclinaison de consigne (φₛₒₗₗ), commandant le dispositif de blocage (21) de manière à bloquer une inclinaison (φ) de l'élément pivotant (4) par rapport à la partie de base (3) entraînant une augmentation de l'écart entre l'inclinaison réelle (φᵢₛₜ) et l'inclinaison de consigne (φₛₒₗₗ), et à permettre une inclinaison (φ) de l'élément pivotant (4) par rapport à la partie de base (3) entraînant une réduction de l'écart entre l'inclinaison réelle (φᵢₛₜ) et l'inclinaison de consigne (φₛₒₗₗ),
**caractérisé en ce que**
le dispositif de détection (17) comprend un réservoir de liquide (29) contenant un liquide (30) et un corps flottant (31) disposé dans le liquide (30).
